# EUROPEAN PATENT APPLICATION

(11) **EP 2 463 479 A2**
(43) Date of publication of application: **13.06.2012**
(21) Application number: 11192909.7
(22) Date of filing: 09.12.2011
(51) Int. Cl.: F01D 5/08

(54) **Turbine rotor disks and turbine assemblies**

(30) Priority: 13.12.2010 US 966694
(71) Applicant: Honeywell International Inc., Morristown, NJ 07962-2245 (US)
(72) Inventor: Halfmann, Steve, Morristown, NJ 07962-2245 (US); Crites, Daniel Cregg, Morristown, NJ 07962-2245 (US); Malak, Malek Fouad, Morristown, NJ 07962-2245 (US); Morris, Mark C., Morristown, NJ 07962-2245 (US); Riahi, Ardeshir, Morristown, NJ 07962-2245 (US); Wakefield, Brandan, Morristown, NJ 07962-2245 (US)
(74) Representative: Buckley, Guy Julian

(57) **Abstract**

A turbine rotor disk is provided. The turbine rotor disk includes a hub, a ring attached to the hub, the ring including a plurality of posts extending radially outwardly and disposed around a circumference of the ring, each post including a first radially-extending face, a second radially-extending face, and a blade attachment surface extending axially between the first and second radially-extending faces, a main cooling air feed channel formed in each post and extending from the first radially-extending face toward the second radially-extending face, and a plurality of ancillary jet openings formed in each post and extending from the main cooling air feed channel to the blade attachment surface.

## Description

### TECHNICAL FIELD

The inventive subject matter generally relates to gas turbine engines, and more particularly relates to turbine rotor assemblies for use in gas turbine engines.

### BACKGROUND

Gas turbine engines, such as turbofan gas turbine engines, may be used to power various types of vehicles and systems including, for example, aircraft. Typically, these engines include turbine blades that are impinged on by high-energy compressed air that causes a turbine of the engine to rotate at a high speed. Consequently, the blades are subjected to high heat and stress loadings which, over time, may reduce their structural integrity.

To improve blade structural integrity, a blade cooling scheme is typically incorporated into the turbines. The blade cooling scheme directs cooling air through an internal cooling circuit formed in the blade to maintain blade temperatures within acceptable limits. The internal cooling circuit may include a simple channel extending through a length of the blade or may consist of a series of connected, serpentine cooling passages, which incorporate raised or depressed structures therein. The serpentine cooling passages increase the cooling effectiveness by extending the length of the air flow path. In this regard, the blade may have multiple internal walls that form the intricate cooling passages through which the cooling air flows. The cooling passages then direct the cooling air to openings at the tip, trailing edge, or elsewhere on the blade.

As the desire for increased engine efficiency continues to rise, engine components are increasingly being subjected to higher and higher operating temperatures. For example, newer engine designs may employ operating temperatures that are about 150° C higher than conventional operating temperatures. However, currently designed engine components, such as the blades, may not be sufficiently designed to withstand such operating temperatures. In an example, certain portions of the blade, such as a platform of the blade, may draw cooling air from the internal cooling circuit, but may not be adequately cooled by the drawn cooling air. Moreover, the cooling air from the internal cooling circuit used to cool the platform can cause an increase in system pressure loss. As a result, engine efficiency is decreased. Additionally, in an event in which a structure of the internal cooling circuit is compromised, platform cooling may be adversely affected.

Accordingly, it is desirable to have an improved system for cooling a blade. In addition, it is desirable for the improved system to adequately cool the blade platform with minimal cooling flow and pressure loss. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

In an embodiment, by way of example only, a turbine rotor disk is provided. The turbine rotor disk includes a hub, a ring attached to the hub, the ring including a plurality of posts extending radially outwardly and disposed around a circumference of the ring, each post including a first radially-extending face, a second radially-extending face, and a blade attachment surface extending axially between the first and second radially-extending faces, a main cooling air feed channel formed in each post and extending from the first radially-extending face toward the second radially-extending face, and a plurality of ancillary jet openings formed in each post and extending from the main cooling air feed channel to the blade attachment surface.

In another embodiment, by way of example only, a turbine assembly is provided that includes a disk including a hub and a ring attached to the hub, the ring including a plurality of posts extending radially outwardly and disposed around a circumference of the ring to define a plurality of blade attachment slots, each post including a first radially-extending face, a second radially-extending face, and a blade attachment surface extending axially between the first and second radially-extending faces, a main cooling air feed channel formed in each post and extending from the first radially-extending face toward the second radially-extending face, and a plurality of ancillary jet openings formed in each post and extending from the main cooling air feed channel to the blade attachment surface, and a plurality of blades disposed in corresponding slots of the plurality of blade attachment slots, each blade including an airfoil, a root, and a platform, the platform supporting the airfoil and having an airfoil-facing wall and a root-facing wall, the root-facing wall defining a cooling cavity with the blade attachment surface for receiving cooling air from the plurality of ancillary jet openings.

### BRIEF DESCRIPTION OF THE DRAWINGS

The inventive subject matter will hereinafter be described in conjunction with the following drawing figures, wherein like numerals denote like elements, and

FIG. 1 is an isometric view of a turbine engine disk, according to an embodiment;

FIG. 2 is an isometric view of a post and a blade of a turbine engine disk, according to an embodiment;

FIG. 3 is an isometric view of a post of a turbine rotor disk, according to an embodiment;

FIG. 4 is a close-up, cross-sectional side view of a portion of a turbine rotor assembly including a blade, according to an embodiment;

FIG. 5 is a close-up, cross-sectional side view of a portion of a turbine rotor assembly including a blade, according to another embodiment;

FIG. 6 is a close-up, cross-sectional side view of a portion of a turbine rotor assembly including a blade, according to still another embodiment; and

FIG. 7 is a close-up, cross-sectional side view of a portion of a turbine rotor assembly including a blade, according to still yet another embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

An improved turbine disk is provided that contributes to cooling a platform for a blade. The improved turbine disk has a hub and a ring attached to the hub, where the ring includes a plurality of posts extending radially outwardly and disposed around a circumference of the ring, each post defined by a first radially-extending face, a second radially-extending face, and a blade attachment surface, the blade attachment surface extending axially between the first and second radially-extending faces, each post including a main cooling air feed channel and a plurality of ancillary jet openings, the main cooling air feed channel extending between the first radially-extending face the second radially-extending face, and the plurality of ancillary jet openings extending from the main cooling air feed channel to the blade attachment surface. Cooling air is directed into the main cooling air feed channel and out of the plurality of ancillary jet openings, which are angled to flow the cooling air toward particular locations on an underside of the platform of the blade.

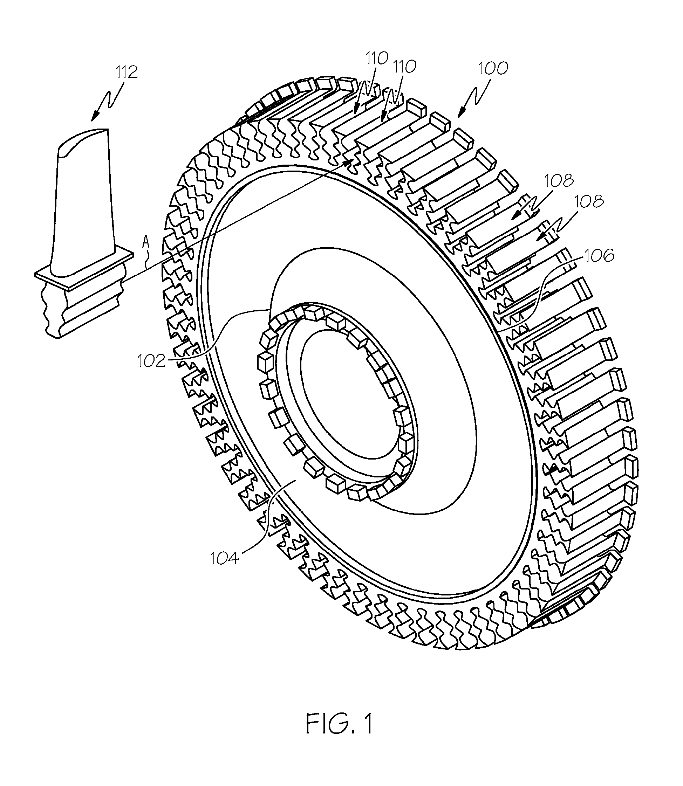

FIG. 1 is an isometric view of a turbine engine disk 100, according to an embodiment. The turbine rotor disk 100 includes a hub 102 and a ring 104 attached to the hub 102. The ring 104 has an outer rim 106 including a plurality of posts 108. The posts 108 extend radially outwardly from and are spaced apart substantially evenly around a circumference of the ring 104. Defined between the posts 108 are a plurality of blade attachment slots 110 configured to receive a corresponding turbine blade 112, as indicated by arrow A. Although fifty-six posts 108 and blade attachment slots 110 are shown, more or fewer posts and slots may be included in other embodiments.

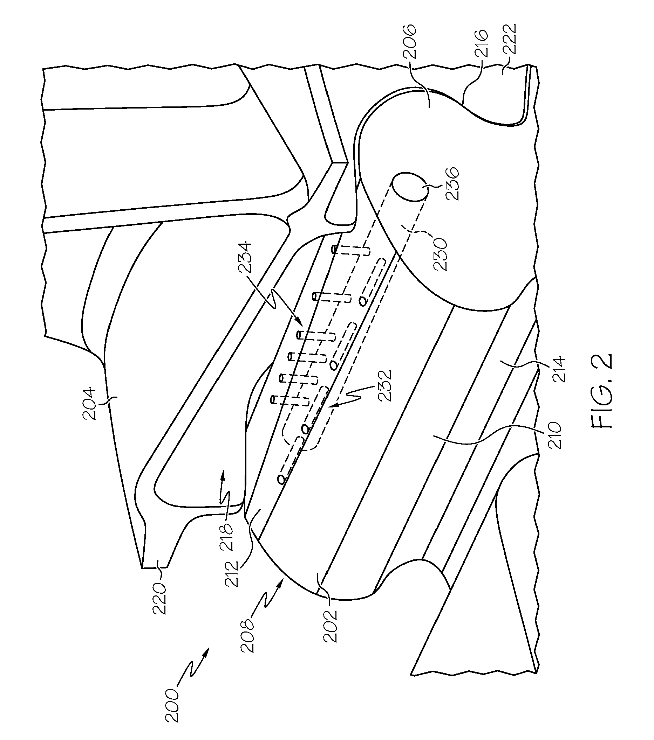

FIG. 2 is an isometric view of a post 202 and a blade 204 of a turbine engine disk 200, according to an embodiment. One of the posts 108 of FIG. 1 can be configured similar to post 202 of FIG. 2. The post 202 includes a first radially-extending face 206, a second radially-extending face 208, and a disk attachment surface 210. It will be appreciated that the first and second radially-extending faces 206, 208 may serve as forward and aft surfaces, respectively, or as aft and forward surfaces, respectively. The disk attachment surface 210 extends axially between the first and second radially-extending faces 206, 208 and has a length in a range of about 2 cm to about 4 cm. In other embodiments, the turbine engine disk 200 is larger or smaller and thus, the length of the disk attachment surface 210 is greater or smaller than the aforementioned range. The disk attachment surface 210 can be divided into a radially outer section 212 and radially inner sections 214, 216. The radially outer section 212 has a relatively flat surface and is configured to be spaced apart from a platform 220 of the blade 204 to form a cooling air cavity 218 for receiving air from a cooling air source. The radially inner sections 214, 216 of two adjacent posts 202 are configured to conform to an outer surface of a blade attachment portion 222 of the blade 204.

The cooling air source provides relatively cool air to the cooling air cavity 218 via a series of passages. The passages are formed in each post 202 of the disk 200 and comprise a main cooling air feed channel 230 and a plurality of ancillary jet openings 232, 234. The main cooling air feed channel 230 extends from the first radially-extending face 206 toward the second radially-extending face 208. Generally, the main cooling air feed channel 230 does not fully extend from the first radially-extending face 206 to the second radially-extending face 208. For example, the main cooling air feed channel 230 can include an inlet 236 formed on the first radially-extending face 206. The plurality of ancillary jet openings 232, 234 serve as outlets for the flow of the cooling air. In the depicted embodiment, the inlet 236 of the main cooling air feed channel 230 is located on the first radially-extending face 206 of the disk 200. In another embodiment, the inlet 236 is located on the second radially-extending face 208 of the disk 200.

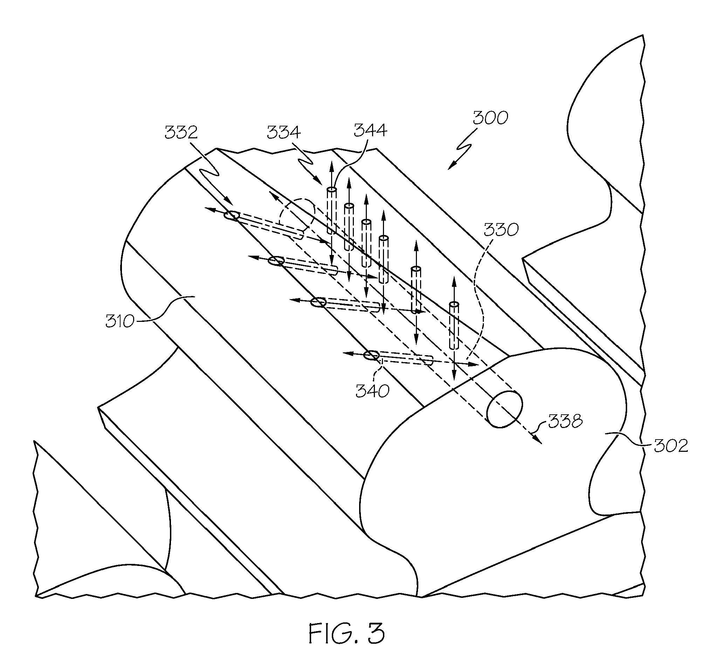

FIG. 3 is an isometric view of a post 302 of a turbine rotor disk 300, according to an embodiment. The post 302 includes a main cooling air feed channel 330 and a plurality of ancillary jet openings 332, 334. As alluded to above, the plurality of ancillary jet openings 332, 334 extend from the main cooling air feed channel 330 to a disk attachment surface 310 of the post 302. To provide impinging jets of cooling air against a platform of a blade, the ancillary jet openings 332, 334 are configured to have much smaller diameters than the main cooling air feed channel 330. In an embodiment, each jet opening 332, 334 has a largest diameter that is between about 4 to about 20 times smaller than a largest diameter of the main cooling air feed channel 330. For example, the jet openings 332, 334 can have diameters in a range of about 0.25 mm to about 0.50 mm, and the main cooling air feed channel 330 can have a diameter in a range of about 2 mm to about 5 mm. In other embodiments, the turbine engine disk 300 is larger or smaller and thus, the specific diameters of the openings 332, 334 and channel 330 are greater or less than the aforementioned ranges. In any case, cooling air flowing through the main cooling air feed channel 330 accelerates as it flows through the openings 332, 334 to thereby impinge upon the blade platform (not shown in FIG. 3). All of the openings 332, 334 are substantially identical in diameter, in an embodiment. In another embodiment, some of the openings 332, 334 have varying diameters.

The plurality of ancillary jet openings 332, 334 are arranged to distribute cooling air to different parts of a cooling air cavity (e.g., cooling air cavity 218 in FIG. 2). For example, the plurality of ancillary jet openings 332, 334 can be made up of a first set of ancillary jet openings 332 and a second set of ancillary jet openings 334, where each opening of the first set of ancillary jet openings 332 extends from the main cooling air feed channel 330 at an angle. In an embodiment, the main cooling air feed channel 330 extends along a first axis 338, and the openings of the first set of ancillary jet openings 332 lie along corresponding second axes 340 that are not parallel with the first axis 338 and are angled relative to the first axis 338 within a first range of angles. In other embodiments, one or more of the second axes 340 intersect with the first axis 338. In any case, the first range of angles includes angles in a range of about 0° to about 45°, in an embodiment. In other embodiments, the first range of angles includes values that are greater than or less than ones that fall within the aforementioned range. Although the openings are shown to be substantially similarly disposed relative to the first axis 338, two or more openings of the first set of ancillary jet openings 332 can be disposed at two or more angles relative to the first axis 338.

Each opening of the second set of ancillary jet openings 334 extends along corresponding third axes 344 that are disposed at angles within a second range of angles relative to the first axis 338, where the third axes 344 extend in directions that are different from those of the second axes 340. The third axes 344 may or may not intersect the first and/or second axes 338, 340. In any case, the second range of angles includes angles in a range of about 0° to about 45°, in an embodiment. In other embodiments, the angles in the second range of angles include values that are greater or less than ones that fall within the aforementioned range. Although the openings are shown to be substantially similarly disposed relative to the first axis 338, two or more openings of the second set of ancillary jet openings 334 can be disposed at two or more angles relative to the first axis 338.

The total number of ancillary jet openings 332, 334 varies depending on size and shape of the post 302. Hence, although ten total jet openings 332, 334 are depicted in FIG. 3, more or fewer can be included in other embodiments. Moreover, although four openings are included as part of the first set of ancillary jet openings 332 and six openings are included as part of the second set of ancillary jet openings 334, more or fewer can be included in each set. Additionally, although the number of openings in each of the first and second sets of ancillary jet openings 332, 334 are unequal in FIG. 3, other embodiments can include equal numbers of openings.

As noted above, the inlet for the cooling air can be provided on a surface serving as either the forward or the aft surface of the post 302. In this regard, the components adjacent to the post 302 (e.g., turbine blades and/or sealing plates) are configured to direct cooling airflow to locations of the post 302 within which the main cooling air feed channel 330 are formed.

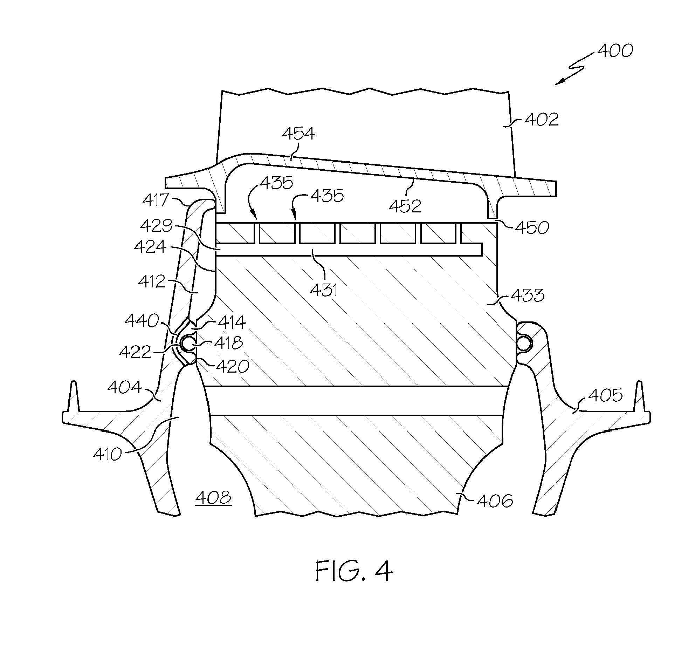

FIG. 4 is a close-up, cross-sectional side view of a portion of a turbine rotor assembly 400 including a blade 402, according to an embodiment. The turbine rotor assembly 400 includes a forward seal plate 404, a turbine rotor disk 406, blades 402 (only one of which is shown), and an aft seal plate 405, in an embodiment. The forward seal plate 404 is spaced apart from the turbine rotor disk 406 to form a flow cavity 408. In particular, the forward seal plate 404 is disposed adjacent to a first radially-extending face 424 of the turbine rotor disk 406 to form the flow cavity 408 for directing cooling air to a main cooling air feed channel 431 (described in more detail below). The flow cavity 408 is configured to be in flow communication with a cooling air source (e.g., a compressor, not shown). An annular sealing flange 414 divides the flow cavity 408 into an inner radial cavity 410 and an outer radial cavity 412.

The annular sealing flange 414 extends axially from the forward seal plate 404 and is configured to seal against a root (not shown) of a corresponding blade 402 in the turbine rotor disk 406. In this regard, the annular sealing flange 414 is disposed radially inward from an outer diameter 417 of the forward seal plate 404. In an embodiment, the annular sealing flange 414 has a relatively flat sealing surface 420 for contacting the blade 402. The sealing flange 414 can include a sealing ring 418 formed in a suitably located groove 422 in the annular sealing flange 414 to improve sealing. The cooling air from the flow cavity 408 is directed to the blade 402 for direction into an inlet 429 of a main cooling air feed channel 431 formed in a post 433 of the disk 406 and out ancillary jet openings 435 in flow communication with the main cooling air feed channel 431. The inlet 429 is formed on a forward surface (i.e., first radially-extending face 424) of the post 433. To provide the outer radial cavity 412 (and thus, the main cooling air feed channel 431 and ancillary jet openings 435) with the cooling air, a delivery channel 440 is formed through the forward seal plate 404. In an embodiment, the delivery channel 440 extends behind the groove 422 of the forward seal plate 404. Although a single delivery channel 440 is included in FIG. 4, a plurality of delivery channels 440 can be included at various locations around the annular sealing flange 414, in other embodiments. In such embodiments, the delivery channels 440 may be substantially evenly spaced around the annular sealing flange 414 or unevenly spaced.

Spent cooling air exits through a gap 450 defined, in part, by an underside 452 of a platform 454 of the blade 402. In this regard, an outermost radial section of the aft seal plate 405 is configured to be located radially inward from the platform 454 of the blade 402. Alternatively, the delivery channel is formed through a root of the blade 402, which is disposed in a blade attachment slot of the turbine rotor disk 406. Because an inner radial surface of the root is spaced apart from the surface defining the blade attachment slot to form a flow channel, the delivery channel can extend from the flow channel to a leading side wall of the root and to flow cooling air from the flow channel into the outer radial cavity 412.

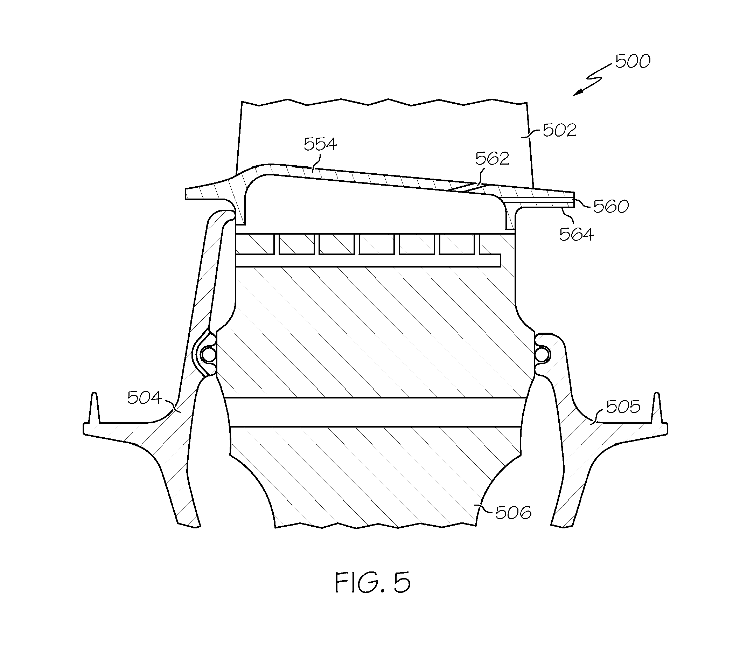

FIG. 5 is a close-up, cross-sectional side view of a portion of a turbine rotor assembly 500 including a blade 502, according to another embodiment. Here, the turbine rotor assembly 500 includes a forward seal plate 504, a turbine rotor disk 506, blades 502 (only one of which is shown), and an aft seal plate 505 each configured similar to the forward seal plate 404, the turbine rotor disk 406, blades 402 (only one of which is shown), and aft seal plate 405 in FIG. 4, except that the aft seal plate 505 extends to contact an underside of a platform 554 of the blade 502. Thus, rather than directing spent cooling air through a gap, as in FIG. 4, the spent air exits through one or more channels 560, 562 formed through a platform 554 of the blade 502. For example, FIG. 5 depicts an exit channel 560 extending through an aft portion 564 of the platform 554 of the blade 502. Alternatively or additionally, one or more channels 562 extend through a wall of the platform 554.

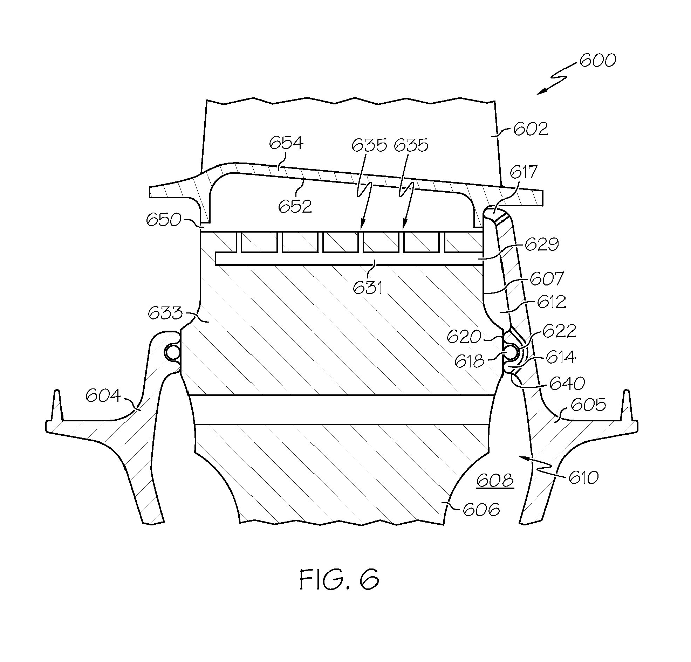

FIG. 6 is a close-up, cross-sectional side view of a portion of a turbine rotor assembly 600 including a blade 602, according to an embodiment. The turbine rotor assembly 600 includes a forward seal plate 604, a turbine rotor disk 606, blades 602 (only one of which is shown), and an aft seal plate 605, in an embodiment. The aft seal plate 605 is spaced apart from the turbine rotor disk 606 to form a flow cavity 608. In particular, the aft seal plate is disposed adjacent to a second radially-extending face 607 of the disk 606 to form the flow cavity for directing cooling air to a main cooling air feed channel 631 1 (mentioned below). The flow cavity 608 is configured to be in flow communication with a cooling air source (e.g., a compressor section, not shown). An annular sealing flange 614 divides the flow cavity 608 into an inner radial cavity 610 and an outer radial cavity 612.

The annular sealing flange 614 extends axially from the aft seal plate 605 and is configured to seal against a root (not shown) of a corresponding blade 602 in the turbine rotor disk 606. In this regard, the annular sealing flange 614 is disposed radially inward from an outer diameter 617 of the aft seal plate 605. In an embodiment, the annular sealing flange 614 has a relatively flat sealing surface 620 for contacting the blade 602. The sealing flange 614 can include a sealing ring 618 formed in a suitably located groove 622 in the annular sealing flange 614 to improve sealing. The cooling air from the flow cavity 608 is directed to the blade 602 for direction into an inlet 629 of a main cooling air feed channel 631 formed in a post 633 of the disk 606 and out ancillary jet openings 635 in flow communication with the main cooling air feed channel 631. The inlet 629 is formed on an aft surface (i.e., second radially-extending face 607) of the post 633. To provide the outer radial cavity 612 (and thus, the main cooling air feed channel 631 and ancillary jet openings 635) with the cooling air, a delivery channel 640 is formed through the aft seal plate 605. In an embodiment, the delivery channel 640 extends behind the groove 622 of the aft seal plate 605. Although a single delivery channel 640 is included in FIG. 6, a plurality of delivery channels 640 can be included at various locations around the annular sealing flange 614, in other embodiments. In such embodiments, the delivery channels 640 may be substantially evenly spaced around the annular sealing flange 614 or unevenly spaced.

Spent cooling air exits through a gap 650 defined, in part, by an underside 652 of a platform 654 of the blade 602. In this regard, an outermost radial section of the forward seal plate 604 is configured to be located radially inward from the platform 654 of the blade 602. Alternatively, the delivery channel is formed through a root of the blade 602, which is disposed in a blade attachment slot of the turbine rotor disk 606. Because an inner radial surface of the root is spaced apart from the surface defining the blade attachment slot to form a flow channel, the delivery channel can extend from the flow channel to a leading side wall of the root and to flow cooling air from the flow channel into the outer radial cavity 612.

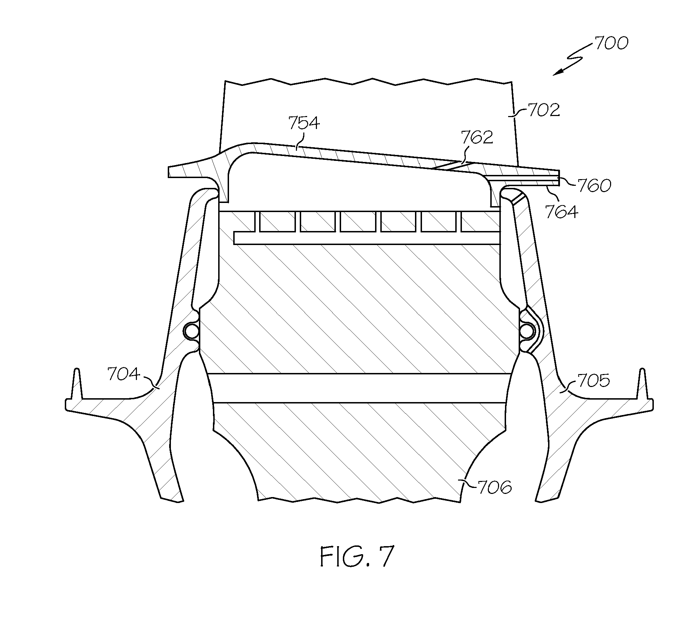

FIG. 7 is a close-up, cross-sectional side view of a portion of a turbine rotor assembly 700 including a blade 702, according to another embodiment. Here, the turbine rotor assembly 700 includes a forward seal plate 704, a turbine rotor disk 706, blades 702 (only one of which is shown), and an aft seal plate 705 each configured similar to the forward seal plate 604, the turbine rotor disk 606, blades 602 (only one of which is shown), and aft seal plate 605 in FIG. 6, except that the forward seal plate 704 extends to contact an underside of a platform 754 of the blade 702. Thus, rather than directing spent cooling air through a gap, as in FIG. 6, the spent air exits through one or more channels 760, 762 formed through a platform 754 of the blade 702. For example, FIG. 7 depicts a channel 760 extending through an aft portion 764 of the platform 754 of the blade 702.

Improved turbine rotor disks and turbine rotor assemblies have now been provided. By including a main cooling air feed channel and a plurality of ancillary jet openings in the posts of a turbine rotor disk, improved cooling of a platform of a blade can be achieved. The main cooling air feed channel can have an inlet formed in either the forward or aft sides of the turbine rotor disk to thereby provide flexibility to the design of the turbine rotor assemblies.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A turbine rotor disk comprising:
a hub;
a ring attached to the hub, the ring including a plurality of posts extending radially outwardly and disposed around a circumference of the ring, each post including a first radially-extending face, a second radially-extending face, and a blade attachment surface extending axially between the first and second radially-extending faces;
a main cooling air feed channel formed in each post and extending from the first radially-extending face toward the second radially-extending face; and
a plurality of ancillary jet openings formed in each post and extending from the main cooling air feed channel to the blade attachment surface.

2. A turbine assembly comprising:
a disk including a hub and a ring attached to the hub, the ring including a plurality of posts extending radially outwardly and disposed around a circumference of the ring to define a plurality of blade attachment slots, each post including a first radially-extending face, a second radially-extending face, and a blade attachment surface extending axially between the first and second radially-extending faces, a main cooling air feed channel formed in each post and extending from the first radially-extending face toward the second radially-extending face, and a plurality of ancillary jet openings formed in each post and extending from the main cooling air feed channel to the blade attachment surface; and
a plurality of blades disposed in corresponding slots of the plurality of blade attachment slots, each blade including an airfoil, a root, and a platform, the platform supporting the airfoil and having an airfoil-facing wall and a root-facing wall, the root-facing wall defining a cooling cavity with the blade attachment surface for receiving cooling air from the plurality of ancillary jet openings.

3. The turbine assembly of claim 2, wherein the plurality of ancillary jet openings includes a first set of ancillary jet openings and a second set of ancillary jet openings, one or more jet openings of the first set of ancillary jet openings extending from the main cooling air feed channel at an angle away from the first set of ancillary jet openings.

4. The turbine assembly of claim 2, wherein:
the first radially-extending face forms a forward face of the rotor;
the main cooling air feed channel has an inlet formed on the forward face; and
the turbine assembly further comprises a forward seal plate disposed adjacent to the first radially-extending face of the rotor to form a flow cavity for directing cooling air to the main cooling air feed channel, the forward seal plate including an annular sealing flange and a delivery channel, the annular sealing flange extending axially from the forward seal plate and sealing against a root of a corresponding blade to divide the flow cavity into an inner radial cavity and an outer radial cavity, the delivery channel extending through the forward seal plate to provide communication between the inner radial cavity and the outer radial cavity.

5. The turbine assembly of claim 4, wherein
the second radially-extending face forms an aft face of the rotor;
the turbine assembly further comprises an aft seal plate disposed adjacent to the second radially-extending face of the rotor, the aft seal plate having an outermost radial section disposed radially inward from the platform of the blade; and
air flows through a gap formed, in part, by an underside of the platform of the blade.

6. The turbine assembly of claim 4, wherein
the second radially-extending face forms an aft face of the rotor;
the turbine assembly further comprises an aft seal plate disposed adjacent to the second radially-extending face of the rotor, the aft seal plate having an outermost radial section contacting the platform of the blade; and
a wall of the platform of the blade including an exit channel for air to flow therethrough.

7. The turbine assembly of claim 2, wherein:
the second radially-extending face forms an aft face of the rotor;
the main cooling air feed channel has an inlet formed on the aft face; and
the turbine assembly further comprises an aft seal plate disposed adjacent to the second radially-extending face of the disk to form a flow cavity for directing cooling air to the main cooling air feed channel.

8. The turbine assembly of claim 7, wherein:
the aft seal plate includes an annular sealing flange and a delivery channel, the annular sealing flange extends axially from the aft seal plate and seals against a root of a corresponding blade to divide the flow cavity into an inner radial cavity and an outer radial cavity, the delivery channel extending through the forward seal plate to provide communication between the inner radial cavity and the outer radial cavity.

9. The turbine assembly of claim 7, wherein:
the aft seal plate includes an annular sealing flange extending axially from the aft seal plate and seals against a root of a corresponding blade to divide the flow cavity into an inner radial cavity and an outer radial cavity;
the corresponding blade is spaced apart from a surface defining a corresponding blade attachment slot to form a flow channel; and
the corresponding blade including a delivery channel providing communication between the flow channel and the outer radial cavity.

10. The turbine assembly of claim 7, wherein
the second radially-extending face forms an aft face of the rotor;
the turbine assembly further comprises a forward seal plate disposed adjacent to the second radially-extending face of the rotor, the forward seal plate having an outermost radial section disposed radially inward from the platform of the blade; and
air flows through a gap formed, in part, by an underside of the platform of the blade.
